# EUROPEAN PATENT APPLICATION

(11) **EP 4 633 006 A1**
(43) Date of publication of application: **15.10.2025**
(21) Application number: 24802574.4
(22) Date of filing: 01.03.2024
(51) Int. Cl.: H02J 50/80

(54) **DEVICE DISCOVERY METHODS, APPARATUSES, AND STORAGE MEDIUM**

(30) Priority: 11.05.2023 CN 202310531659
(71) Applicant: ZTE Corporation, Shenzhen, Guangdong 518057 (CN)
(72) Inventor: SI, Yuan, Shenzhen, Guangdong 518057 (CN); DAI, Bo, Shenzhen, Guangdong 518057 (CN); ZHANG, Shujuan, Shenzhen, Guangdong 518057 (CN)
(74) Representative: Ziebig Hengelhaupt Intellectual Property Attorneys Patentanwaltskanzlei PartGmbB
(86) International application number: PCT/CN2024/079669
(87) International publication number: WO 2024/230286

(57) **Abstract**

Disclosed are device discovery methods, apparatuses, and a storage medium. A method comprises: a first communication node receives a discovery signal, the discovery signal being used for discovering an energy supply device.

## Description

The present disclosure claims a priority of Chinese Patent Application No. 202310531659.9, filed on May 11, 2023, the entire contents of which are incorporated into this application by reference.

### TECHNICAL FIELD

The present disclosure relates to the technical field of communications, and in particular, relates to a device discovery method, an apparatus, and a storage medium.

### BACKGROUND

Wireless energy transmission technology refers to a technology for transmitting electric energy or other forms of energy through radio waves. This technology has advantages such as convenience and applicability, has been widely used in energy supply, and continues to develop and improve. With technological advancement, the application scope of this technology is gradually expanding.

### SUMMARY

In an aspect, there is provided a device discovery method, applied to a first communication node. The device discovery method includes:
receiving a discovery signal, where the discovery signal is used to discover a power supply device.

In another aspect, there is provided a device discovery method, applied to a second communication node. The device discovery method includes:
transmitting a discovery signal, where the discovery signal is used to discover a power supply device.

In yet another aspect, there is provided a communication apparatus. The communication apparatus includes:
a receiving module, configured to receive a discovery signal, where the discovery signal is used to discover a power supply device.

In yet another aspect, there is provided a communication apparatus. The communication apparatus includes:
a transmission module, configured to transmit a discovery signal, where the discovery signal is used to discover a power supply device.

In yet another aspect, there is provided a communication apparatus. The communication apparatus includes a processor, where the processor implements the device discovery method described in any of the foregoing aspects upon executing a computer program.

In yet another aspect, there is provided a computer-readable storage medium. The computer-readable storage medium includes computer instructions; where, when the computer instructions are executed, the device discovery method described in any of the foregoing aspects is implemented.

### BRIEF DESCRIPTION OF THE DRAWINGS

FIG. 1 is a schematic architectural diagram of a communication system according to some embodiments.
FIG. 2 is an interaction flowchart of a device discovery method according to some embodiments.
FIG. 3 is a schematic structural diagram of beam scanning according to some embodiments.
FIG. 4 is an interaction flowchart of another device discovery method according to some embodiments.
FIG. 5 is an interaction flowchart of access authentication according to some embodiments.
FIG. 6 is an interaction flowchart of another access authentication according to some embodiments.
FIG. 7 is an interaction flowchart of yet another access authentication according to some embodiments.
FIG. 8 is a schematic structural diagram of a transmission symbol according to some embodiments.
FIG. 9 is a schematic structural diagram of another transmission symbol according to some embodiments.
FIG. 10 is a schematic structural diagram of yet another transmission symbol according to some embodiments.
FIG. 11 is a schematic structural diagram of a first communication node according to some embodiments.
FIG. 12 is a schematic structural diagram of a second communication node according to some embodiments.
FIG. 13 is a schematic structural diagram of a communication apparatus according to some embodiments.

### DETAILED DESCRIPTION

To enable those skilled in the art to better understand the technical solutions of the embodiments of the present disclosure, the technical solutions in the embodiments of the present disclosure will be described clearly and completely in combination with the drawing in the embodiments of the present disclosure. Obviously, the described embodiments are merely a part of the embodiments of the present disclosure, rather than all embodiments. Based on the embodiments in the present disclosure, all other embodiments obtained by persons of ordinary skill in the art without creative effort belong to the protection scope of the present disclosure.

In the description of the present disclosure, unless otherwise specified, "/" means "or", for example, A/B may represent A or B. "And/or" herein is merely an association relationship describing associated objects, indicating that three relationships may exist, for example, A and/or B may indicate: only A, only B, and both A and B. Furthermore, "at least one" refers to one or more, and "plurality of/multiple" refers to two or more. Wordings such as "first" and "second" do not limit a quantity or an execution order, and wordings such as "first" and "second" do not necessarily indicate differences.

It should be noted that in the present disclosure, wordings such as "exemplarily" or "for example" are used to provide examples, illustrations, or explanations. Any embodiment or design solution described as "exemplarily" or "for example" in the present disclosure should not be interpreted as being more preferred or advantageous than other embodiments or design solutions. Specifically, the usage of wordings such as "exemplarily" or "for example" is intended to present related concepts in a concrete manner.

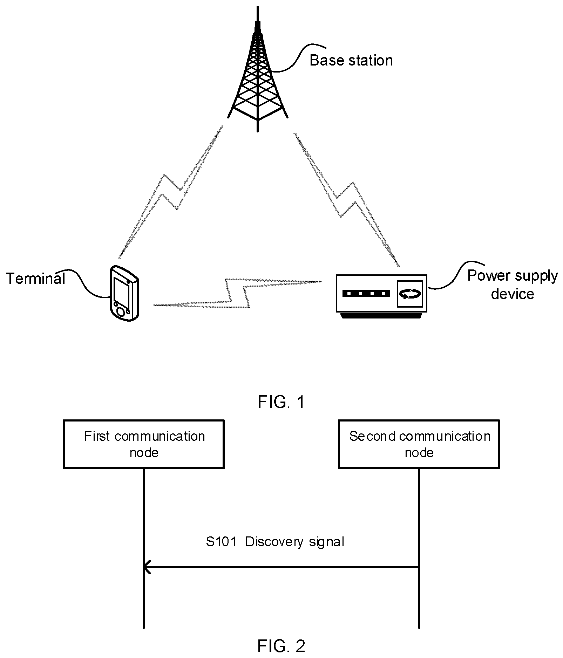

Exemplarily, FIG. 1 shows a structural schematic diagram of a communication system according to some embodiments. The communication system may include a base station, a terminal, and a power supply device.

The base station may be configured to implement functions, such as resource scheduling, radio resource management, radio access control for a terminal. In some embodiments, the base station may be any node including a small base station, a wireless access point, a transmission receive point (TRP), a transmission point (TP), and some other access nodes.

The terminal may be a device with a terminal functionality. The terminal may also be called a user equipment (UE), a mobile station, a mobile terminal, etc. The terminal may be a smartphone, a tablet, a computer with wireless transceiving function, a virtual reality terminal, an augmented reality terminal, a wireless terminal in industrial control, a wireless terminal in unmanned driving, a wireless terminal in remote surgery, a wireless terminal in transportation safety, a wireless terminal in smart city, a wireless terminal in smart home, and the like. The embodiments of the present disclosure do not limit a device form adopted by the terminal.

The power supply device may transmit an energy signal to the terminal device to supply energy for the terminal.

It should be noted that FIG. 1 is merely an exemplary framework diagram, a number of devices included in FIG. 1 and names of devices are not limited, and the energy supply system may further include other devices besides devices shown in FIG. 1.

Application scenarios of the embodiments of the present disclosure are not limited. The system architecture and service scenario described in embodiments of the present disclosure are provided to more clearly illustrate the technical solutions of embodiments of the present disclosure, and do not constitute a limitation on the technical solutions provided by the embodiments of the present disclosure. Those ordinary technicians in the field know that, with the evolution of network architecture and the emergence of new service scenarios, the technical solutions provided by the embodiments of the present disclosure are also applicable to similar technical problems.

As shown in FIG. 2, the embodiments of the present disclosure provide a device discovery method, where the method includes the following S101.

In S101: a second communication node transmits a discovery signal; correspondingly, a first communication node receives the discovery signal.

The discovery signal is used to discover a power supply device.

Exemplarily, the first communication node may be a terminal or a base station, and the second communication node may be a power supply device or a base station, which is not limited herein. For example, after a terminal receives a discovery signal from a certain power supply device (taking power supply device A as an example), a terminal completes the discovery of power supply device A and then accesses power supply device A, so as to be charged by the power supply device.

It can be understood that the above process of discovering a power supply device belongs to passive discovery, that is, the first communication node discovers the power supply device by receiving the discovery signal transmitted from the second communication node, thereby reducing energy consumption of the first communication node.

Exemplarily, the discovery signal in embodiments of the present disclosure may have other names such as a discovery unit, which is not limited herein.

In some embodiments, taking the first communication node as the terminal and the second communication node as the power supply device as example, the discovery signal may be an energy signal transmitted from the power supply device. The energy signal is a signal through which the power supply device performs wireless energy transmission to other devices. In this way, when the discovery signal is an energy signal, after the terminal receives the discovery signal, the terminal can not only discover a power supply device, but also directly use the discovery signal to complete self-charging, thereby improving charging efficiency of the terminal.

In some embodiments, the discovery signal includes information related to the power supply device. Exemplarily, the information related to the power supply device includes at least one of: a transmission frequency of an energy signal; a bandwidth of the energy signal; a waveform of the energy signal; a period of the energy signal; a power of the energy signal; an access and synchronization mode; an access preamble; or an authentication mode.

In this way, when the discovery signal received by the first communication node includes the information related to the power supply device, the first communication node may distinguish power supply devices according to a transmission frequency of the energy signal, a bandwidth of the energy signal, a waveform of the energy signal, a period of the energy signal, and a power of the energy signal, so that the first communication node may quickly find a corresponding energy supply device, thereby improving the efficiency of finding the energy supply device; the first communication node may quickly access the energy supply device according to the access and synchronization mode, the access preamble and the authentication mode, thus improving the access efficiency and the security in the communication process.

In some embodiments, the discovery signal is a broadcast signal. The broadcast signal is a signal specific to the power supply device. It can be seen that when discovery signal is a broadcast signal, the discovery signal may be broadcast to all first communication nodes under a coverage area of the base station, enabling a plurality of first communication nodes to simultaneously discover the power supply device, and further improve the efficiency of discovering the energy supply device.

In some embodiments, the discovery signal has a specific waveform, and/or the discovery signal includes a specific sequence. In this way, by determining whether there is a specific waveform and/or a signal containing a specific sequence in a received signal, it is determined whether the discovery signal has been received, thereby simplifying the way of discovering the power supply device and improving the reliability and safety in the communication process according to the waveform and the specific sequence.

In some embodiments, the discovery signal is transmitted on a specific channel. Exemplarily, the specific channel may be a physical downlink shared channel (PDSCH), a master information block (MIB), and a system information block (SIB). In this way, when the discovery signal is transmitted on the above specific channel, the influence of other signals or interference on the channel may be avoided, thereby improving the communication quality and stability.

In some embodiments, the discovery signal is a periodically transmitted signal.

Exemplarily, the discovery signal propagates at a fixed period. For example, the second communication node transmits a discovery signal every T duration. As another example, the discovery signal may be transmitted at a non-fixed period. For example, the period increases by T duration: after T duration through which the first communication node transmits a discovery signal for the first time, a discovery signal is transmitted for the second time, and an interval between a discovery signal transmitted for the third time and the discovery signal transmitted for the second time is 2T. In this way, periodic transmission of an discovery signal may ensure the continuity and reliability of communication, thereby avoiding a situation where the first communication node fails to receive the discovery signal.

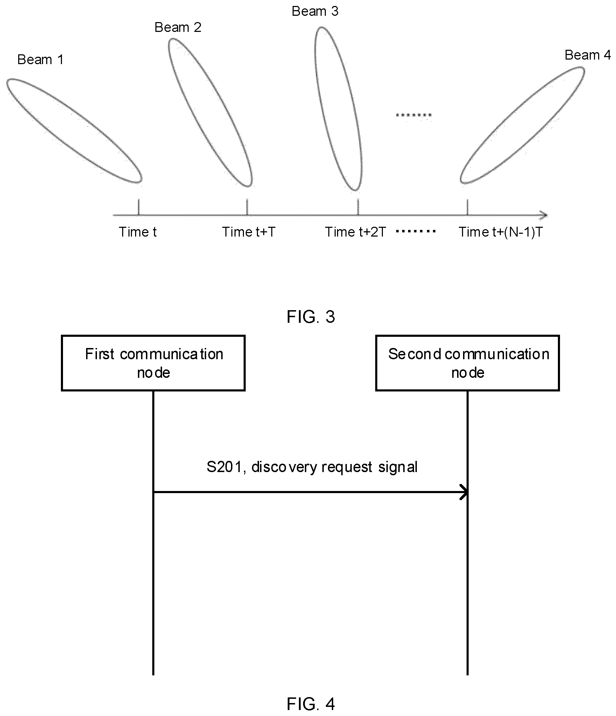

In some embodiments, the discovery signal is transmitted using beam scanning. Exemplarily, as shown in FIG. 3, taking period as T as an example, at time t, a discovery signal is transmitted in form of beam 1; at time t+T, a discovery signal is transmitted in form of beam 2; at time t+2T, a discovery signal is transmitted in form of beam 2; and at time t+(N-1)T, a discovery signal is transmitted in form of beam N. It should be noted that beam scanning controls a transmission direction of the discovery signal by adjusting an irradiation direction. Through beam scanning, the discovery signal can be concentrated in a specific direction, thereby reducing scattering and refraction of the discovery signal in other directions, effectively improving the transmission efficiency and the quality of the discovery signal, reducing path loss of the discovery signal and improving the transmission distance and penetration of the signal.

In some embodiments, the discovery signal may be transmitted through proximity services (ProSe). It should be noted that the proximity services enable direct communication between the first communication node and the second communication node. The discovery signal may be directly transmitted between the first communication node and the second communication node through Vehicle-to-Everything PC5 Communication Channel. In this way, the communication speed between the first communication node and the second communication node is improved through the proximity services, and the first communication node and the second communication node may communicate directly, thus avoiding the risk that the transmission data is interfered at an intermediary node, improving the communication security, reducing the usage of an intermediary node and reducing energy consumption and cost.

In some other embodiments, based on embodiments shown in FIG. 2, as shown in FIG. 4, the device discovery method further includes the following S201 before S101.

In S201, the first communication node transmits a discovery request signal; correspondingly, the second communication node receives the discovery request signal transmitted from the first communication node.

The discovery request signal is used to request the second communication node to transmit the discovery signal.

In some embodiments, the discovery request signal includes information related to the first communication node.

The information related to the first communication node includes at least one of: identity authentication information of the first communication node, a device type of the first communication node, and charging power of the first communication node.

It may be understood that when the power supply device receives the above discovery request signal, the information related to the first communication node corresponding to the discovery request signal may be determined according to the above discovery request signal. For example, the security of communication data may be ensured according to the identity authentication information. If the power supply device detects that the identity authentication information is transmitted from an unknown device, it may choose to disconnect communication connection with the corresponding device (i.e., the unknown device), thereby ensuring the security of communication data. According to differences in device type and charging power, the second communication node may adapt to more different types of devices, thereby improving generality during charging power process, and enabling the second communication node to meet more types of devices in the charging power process.

In some embodiments, the discovery request signal has a specific waveform, and/or the discovery request signal includes a specific sequence.

As an example, a discovery request signal may be a signal with a specific waveform, such as a broadband pulse signal, an orthogonal frequency division multiplexing (OFDM) signal, or a narrowband sine wave. In this way, by setting discovery request signals with different waveforms or sequences, a recognition level of a discovery signal may be improved, so that the first communication node may easily distinguish other signals after receiving the discovery request signal, thereby improving the reliability and anti-interference of communication.

As another example, the discovery request signal includes a specific sequence. For example, the specific sequence may be a zadoff-chu (ZC) sequence, a GOLD sequence, an m-sequence, or other sequences. In this way, the discovery request signal includes the specific sequence, so that the security during communication process may be improved, and the specific sequence may also set to meet actual application requirements.

In some embodiments, the discovery request signal is a signal transmitted on a specific transmission resource. Exemplarily, a specific transmission resource is a time-frequency resource dedicated for discovering a power supply device. The above time-frequency resource may be one or more video resource blocks preconfigured by the first communication node and the second communication node, or a time-frequency resource block allocated by the base station through a control signaling. The control signaling may be downlink control information (DCI), a media access control control element (MAC CE), and a radio resource control (RRC) signaling. In this way, during a process where the first communication node transmits the discovery request signal, the base station may allocate a time-frequency resource block through a control signaling, so that the first communication node may be better scheduled and managed, resource abuse and waste may be avoided, and resource utilization rate may be improved.

In some embodiments, the discovery request signal is transmitted on a specific channel. Exemplarily, a specific channel may be PUSCH, PUCCH, PSDCH, or PUSCH.

In some embodiments, the discovery request signal includes a reference signal. The reference signal is used to assist the power supply device in channel measurement and/or beam training. It should be noted that channel measurement is to select channel state information for transmitting an energy signal based on the reference signal, such as channel quality, interference level. That is, an optimal channel for transmitting an energy signal may be determined according to the reference signal. Beam training may select and adjust a direction for subsequently transmitting an energy signal according to the reference signal, so that the energy signal is concentrated at the first communication node, to reduce energy loss and interference from other signals.

Exemplarily, the reference signal is a sequence or a waveform preconfigured by the first communication node and the second communication node. In this way, encryption measures are added through a preconfigured sequence or waveform in communication between the first communication node and the second communication node, so that security during communication process may be improved.

In some embodiments, in a case where the second communication node is a power supply device, the discovery request signal is further used to wake up the power supply device in a dormant state. It may be understood that the power supply device enters a dormant state to save energy. During the dormant state of the power supply device, the power supply device cannot receive or respond to an external signal, resulting in the problems that the energy supply device is difficult to be found and cannot be authenticated. Therefore, the discovery request signal may wake up the power supply device in a dormant state, enabling the power supply device to timely respond to the discovery request or the identity authentication request. In this way, the discovery request signal may improve the reliability and response speed during the process of discovering the power supply device, enabling the first communication node to discover the power supply device more quickly.

In some embodiments, the discovery request signal includes a beam index. The beam index is used to indicate a transmission beam of the power supply device. It should be noted that the power supply device needs to send an energy signal to the first communication node through a beam, to complete energy supply for the first communication node. Exemplarily, in a case where the above beam index included in the discovery request signal is 1, it is used to instruct the power supply device to use the beam with index 1 to complete transmission of the energy signal. In this way, by transmitting the energy signal through a specific beam, accuracy during energy transmission process may be improved, thus the transmission efficiency may be improved, and the interference of other devices may be reduced, so that the reliability and safety in the process of energy transmission may be improved, and the energy loss in the process of energy transmission may also be reduced.

In some embodiments, the discovery request signal may be transmitted through proximity services (ProSe).

It may be understood that the process of discovering the power supply device shown in FIG. 4 belongs to an active discovery. That is, the first communication node transmits a discovery request signal, which makes the second communication node send a discovery signal, and finally makes the first communication node discover the power supply device. In this way, the first communication node may actively transmit a discovery request signal to enable the second communication node to transmit a discovery signal as soon as possible, so as to reduce a time for discovering the energy supply device and improve the efficiency of discovering the energy supply device.

In some embodiments, after the first communication node receives the discovery signal, the method further includes: performing, by the first communication node, access authentication procedure with the power supply device or the base station.

It should be noted that, after the first communication node discovers the energy supply device, in order to ensure the safety in the transmission process of an energy signal, the first communication node needs to perform access authentication to prove that the first communication node itself has the charging authority, and may prevent other devices from maliciously accessing the energy supply device.

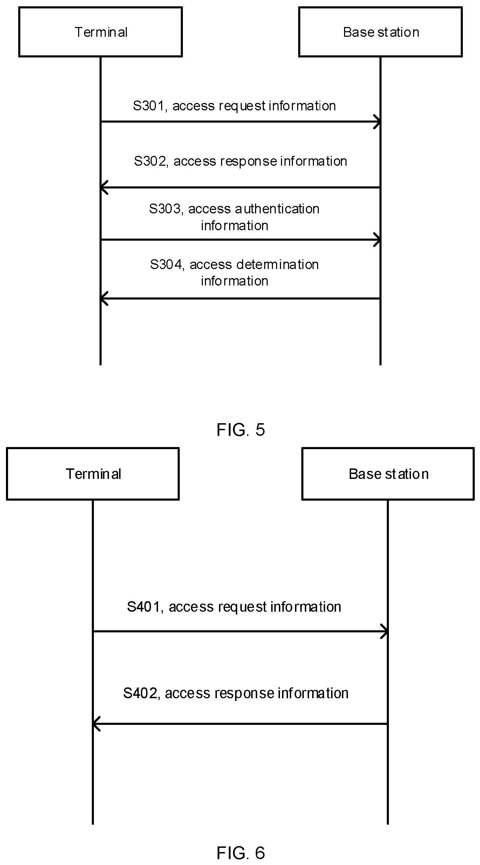

In some embodiments, as shown in FIG. 5, FIG. 5 shows an interaction flowchart of access authentication involving a terminal and a base station according to some embodiments of the present disclosure, including the following S301-S304.

In S301, the terminal transmits access request information to the base station; correspondingly, the base station receives access request information transmitted from the terminal.

As an example, the access request information may be referred to as message1 (msg1). The access request information includes identity authentication information of the terminal. The identity authentication information of the terminal is a random access preamble of the terminal, including a temporary cell radio network temporary identity (TC-RNTI) of the terminal.

In S302, the base station transmits access response information to terminal; correspondingly, the terminal receives access response information transmitted from the base station.

Exemplarily, the access response information may be referred to as message2 (msg2). The access response information includes TC-RNTI of the terminal encrypted and transmitted from the base station using the physical downlink control channel (PDCCH).

In S303, the terminal decrypts the access response information and transmits access authentication information to the base station; correspondingly, the base station receives the access authentication information transmitted from the terminal.

Exemplarily, the access authentication information may be referred to as message3 (msg3). The access authentication information is used to indicate whether the terminal has energy charging authorization.

In S304, the base station transmits access determination information to the terminal; correspondingly, the terminal receives the access determination information transmitted from the base station.

Exemplarily, the access determination information may be referred to as message4 (msg4). After confirming that the terminal has energy charging authorization, the base station transmits the access determination information to the terminal. The access determination information includes identity information of the terminal. After the terminal receives the access determination information, the terminal determines whether identity information in the access determination information matches itself. If so, it proves that the terminal access authentication is successful; otherwise, the authentication fails.

In some embodiments, the access request information in S301 and the access authentication information in S303 may be signals dedicated to energy transmission and may carry device type information of the terminal.

In some other embodiments, based on the embodiment shown in FIG. 5, as shown in FIG. 6, FIG. 6 is an interaction flowchart of another access authentication provided by some embodiments of the present disclosure, including the following S401-S402.

In S401, the terminal transmits access request information to the base station; correspondingly, the base station receives the access request information transmitted from the terminal.

Exemplarily, the access request information may be referred to as messageA (msgA). The access request information includes identity authentication information of the terminal, which is used to indicate whether the terminal has energy charging authorization.

In S402, the base station transmits access response information to the terminal; correspondingly, the terminal receives the access response information transmitted from the base station.

Exemplarily, the access response information may be referred to as messageB (msgB). The access response information includes TC-RNTI of the terminal and identity information of the terminal encrypted and transmitted from the base station using the physical downlink control channel (PDCCH). After the terminal receives the access response information, the terminal determines whether identity information in access response information matches itself. If so, it proves that the terminal access authentication is successful; otherwise, the authentication fails.

In process where the terminal requests accessing to the power supply device, access authentication of the terminal may be completed jointly by the power supply device and the base station.

It may be understood that in embodiments shown in FIG. 5 and FIG. 6, after the terminal completes access authentication, the base station transmits an access authentication result of the terminal to the power supply device. **If** the terminal access authentication is successful, the power supply device allows the terminal to access; otherwise, the power supply device does not allow the terminal to access.

It should be understood that the process of directly performing access authentication between the terminal and the power supply device may refer to the process of performing access authentication between the terminal and the base station, that is, reference may be referred to the content of the embodiments shown in FIG. 5 or FIG. 6, which will not be repeated herein.

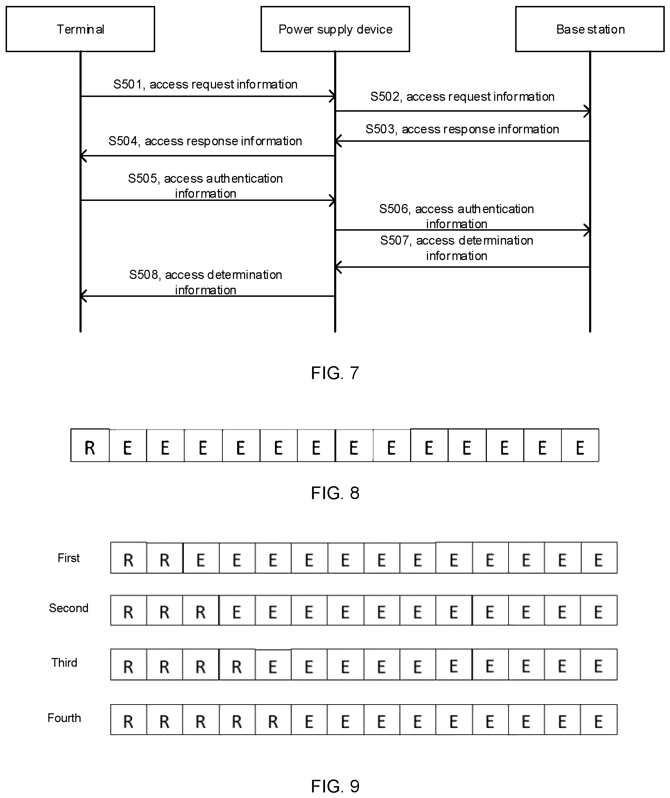

In some embodiments, as shown in FIG. 7, FIG. 7 is an interaction flowchart of access authentication involving the terminal, the power supply device, and the base station provided by some embodiments of the present disclosure, including the following S501-S508.

In S501, the terminal transmits access request information to the power supply device; correspondingly, the power supply device receives the access request information transmitted from the terminal.

In S502, the power supply device transmits the access request information to the base station; correspondingly, the base station receives the access request information forwarded by the power supply device.

In S503, the base station transmits access response information to the power supply device; correspondingly, the power supply device receives the access response information transmitted from the base station.

In S504, the power supply device transmits the access response information to the terminal; correspondingly, the terminal receives access response information forwarded by the power supply device.

In S505, the terminal transmits access authentication information to the power supply device; correspondingly, the power supply device receives the access authentication information transmitted from the terminal.

In S506, the power supply device transmits the access authentication information to the base station; correspondingly, the base station receives the access authentication information forwarded by the power supply device.

In S507, the base station transmits access determination information to the power supply device; correspondingly, the power supply device receives the access determination information transmitted from the base station.

In S508, the power supply device transmits the access determination information to the terminal; correspondingly, the terminal receives the access determination information forwarded by the power supply device.

Exemplarily, a size of the access determination information may be 1 bit. When a value of the access determination information is 1, it indicates the terminal access authentication is successful; when the value of the access determination information is 0, it indicates the terminal access authentication fails.

It may be understood that in the above access authentication process in which the terminal, the power supply device, and the base station participate, a substantive content of the access request information and other related information does not change, and the device for processing the corresponding information does not change. The energy supply device only forwards the information transmitted from the terminal and the base station as an intermediary to complete the access authentication process of the terminal.

In some embodiments, after the first communication node passes access authentication, the base station transmits, to the first communication node, a transmission mode of an energy request signal for transmitting to the power supply device.

The energy request signal is used to request the power supply device to transmit an energy signal to the first communication node. Modes for the first communication node to transmit an energy request signal to the power supply device include at least one of: a time-frequency resource, a transmission sequence, a transmission period for sending a request signal.

In this way, the first communication node may select the time-frequency resource for transmitting the energy request signal according to the above-mentioned transmission mode, so as to rationally allocate the time-frequency resource and improve the transmission efficiency of the energy request signal; the first communication node may determine the transmission sequence for transmitting the energy request signal according to the above transmission mode, and may use a specific transmission sequence to transmit the energy request signal, thereby improving the accuracy and stability of signal transmission; the first communication node may determine the transmission period of the energy request signal according to the above transmission mode, thereby improving the timeliness and response speed of signal transmission, the reasonable determination of the transmission period also reduces the energy consumption of transmitting the energy request signal.

Exemplarily, the energy request signal may be a specific pilot sequence, used to assist the power supply device in channel estimation and beam training. In this way, using the specific pilot sequence as the energy request signal may help the power supply device optimize transmission efficiency of subsequent energy signal transmission, improve the transmission efficiency, and reduce the transmission energy consumption.

In some embodiments, after the first communication node successfully accesses the power supply device, the terminal receives an energy signal transmitted from the power supply device. The energy signal is used to charge the terminal.

In some embodiments, the first communication node transmits a reference signal to the power supply device. The reference signal is used to assist the power supply device in channel measurement and/or beam training.

In some embodiments, the reference signal and the energy signal are transmitted in a time division duplex manner.

Exemplarily, as shown in FIG. 8, the reference signal and the energy signal are transmitted within a time slot. There are 14 symbols in one time slot. R identifies a symbol carrying a reference signal; E represents a symbol carrying an energy signal. A symbol carrying a reference signal may be any one of 14 symbols.

As another example, as shown in FIG. 9, in a time slot, there may be K symbols for carrying a reference signal, where K is non-negative integer not greater than 14. The reference signal may occupy continuous K symbols, which may be the first K symbols in a time slot, as shown in the four symbol forms in FIG. 9. The first symbol form is that the reference signal occupies the first two symbols in a time slot; the second symbol form is that the reference signal occupies the first three symbols in a time slot; the third symbol form is that the reference signal occupies the first four symbols in a time slot; the fourth symbol form is that the reference signal occupies the first five symbols in a time slot. The reference signal may also start from the N-th symbol, to occupy continuous symbols, where N is non-negative integer not greater than 14.

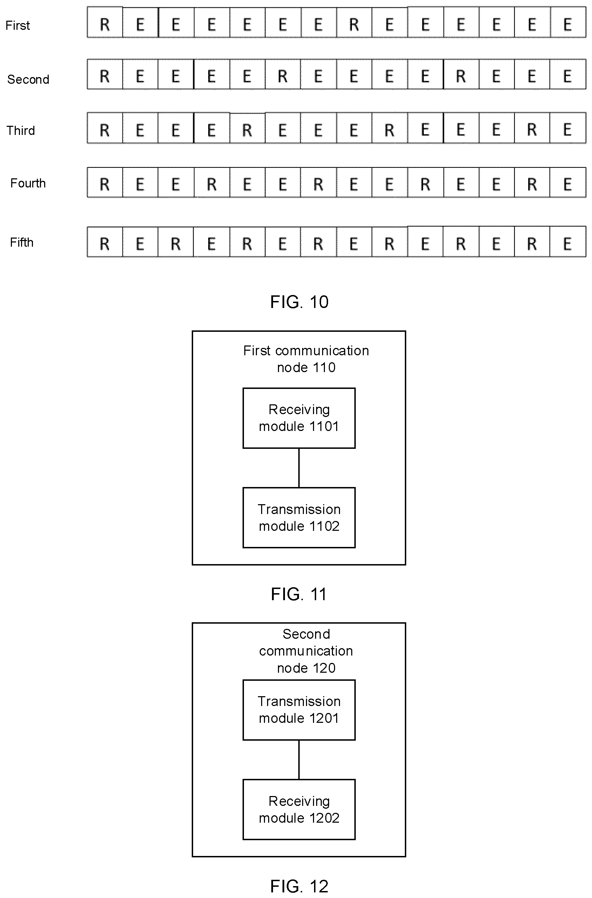

As another example, as shown in FIG. 10, the reference signal may occupy non-continuous symbols in a time slot, which starts from the N-th symbol and inserts one reference signal every M symbols, where M is a positive integer. As shown in the first symbol form in FIG. 10, a reference signal is inserted every six symbols; the second symbol form is that a reference signal is inserted every four symbols; the third symbol form is that a reference signal is inserted every three symbols; the fourth symbol form is that a reference signal is inserted every two symbols; the fifth symbol form is that a reference signal is inserted every one symbol.

It should be noted that the present disclosure does not limit the mode in which the reference signal occupies symbol(s), and the reference signal may occupy any K symbols in any manner.

It may be understood that, in order to realize the above functions, the communication apparatus includes corresponding hardware structure(s) and/or software module(s) to implement the above functions. Those skilled in art should readily appreciate that the present disclosure may be implemented in hardware or a combination of hardware and computer software in combination with algorithm steps of examples described in combination with the embodiments disclosed herein. Whether a certain function is executed by hardware or computer software-driven hardware depends on the specific application and design constraint(s) of the technical solution. Skilled technician(s) may use different methods to implement the described function(s) for each specific application, but such implementation(s) should not be considered beyond the scope of the present disclosure.

The embodiments of the present disclosure may divide the communication apparatus into functional module(s) according to the aforementioned method embodiment(s), for example, each functional module may be divided corresponding to each function, or two or more functions may be integrated into one functional module. The integrated module(s) may be implemented in a hardware form or a software form. It should be noted that the division of module(s) in the embodiments of the present disclosure is illustrative and merely a logical function division; there may be other division manners in actual implementations. The following description takes dividing each functional module corresponding to each function as an example.

FIG. 11 shows a structural schematic diagram of a first communication node provided according to some embodiments of the present disclosure. As shown in FIG. 11, the first communication node 110 includes a receiving module 1101.

The receiving module 1101 is configured to receive a discovery signal, where the discovery signal is used to discover a power supply device.

In some embodiments, the discovery signal includes information related to the power supply device, where the information related to the power supply device includes at least one of: a transmission frequency of an energy signal; a bandwidth of the energy signal; a waveform of the energy signal; a period of the energy signal; a power of the energy signal; an access and synchronization mode; an access preamble; or an authentication mode.

In some embodiments, the discovery signal is an energy signal transmitted from the power supply device.

In some embodiments, the discovery signal is a broadcast signal.

In some embodiments, the discovery signal has a specific waveform, and/or the discovery signal includes a specific sequence.

In some embodiments, the discovery signal is transmitted on a specific channel.

In some embodiments, the discovery signal is a periodically transmitted signal.

In some embodiments, the discovery signal is transmitted using beam scanning.

In some embodiments, the discovery signal is a signal transmitted on a specific transmission resource.

In some embodiments, the first communication node 110 further includes a transmission module 1102, where the transmission module 1102 is configured to transmit a discovery request signal, where the discovery request signal is used for requesting to transmit the discovery signal.

In some embodiments, the discovery request signal includes information related to the first communication node, where the information related to the first communication node includes at least one of: identity authentication information of the first communication node; a device type of the first communication node; or a charging power of the first communication node.

In some embodiments, the discovery request signal has a specific waveform, and/or the discovery request signal includes a specific sequence.

In some embodiments, the discovery request signal is a signal transmitted on a specific transmission resource.

In some embodiments, the discovery request signal is transmitted on a specific channel.

In some embodiments, the discovery request signal includes a reference signal, where the reference signal is used for assisting the power supply device in channel measurement and/or beam training.

In some embodiments, the discovery request signal is further used to wake up a power supply device in a dormant state.

In some embodiments, the discovery request signal is further used to wake up a power supply device in a dormant state.

In some embodiments, the discovery request signal includes a beam index, where the beam index is used for instructing the power supply device to transmit a beam.

In some embodiments, the transmission module 1102 is further configured to transmit an access request message to the power supply device or a base station.

In some embodiments, the access request message includes identity authentication information of the first communication node.

In some embodiments, the receiving module 1101 is further configured to receive an energy signal from the power supply device.

In some embodiments, the transmission module 1102 is further configured to transmit a reference signal to the power supply device, where the reference signal is used to assist the power supply device in channel measurement and/or beam training.

In some embodiments, the reference signal and the energy signal are transmitted in a time division duplexing mode.

FIG. 12 shows a structural schematic diagram of a second communication node provided by the embodiments of the present disclosure. As shown in FIG. 12, the second communication node 120 includes a transmission module 1201.

In some embodiments, the transmission module 1201 is configured to transmit a discovery signal, where the discovery signal is used to discover a power supply device.

In some embodiments, the discovery signal includes information related to the power supply device, where the information related to the power supply device includes at least one of: a transmission frequency of an energy signal; a bandwidth of the energy signal; a waveform of the energy signal; a period of the energy signal; a power of the energy signal; an access and synchronization mode; an access preamble; or an authentication mode.

In some embodiments, the second communication node 120 further includes a receiving module 1202; the receiving module 1202 is configured to receive a discovery request signal transmitted from the first communication node, where the discovery request is used for requesting to transmit a discovery signal.

In some embodiments, the transmission module 1201 is further configured to transmit an energy signal to the first communication node.

In some embodiments, the receiving module 1202 is further configured to receive a reference signal transmitted from the first communication node, where the reference signal is used to assist the power supply device in channel measurement and/or beam training.

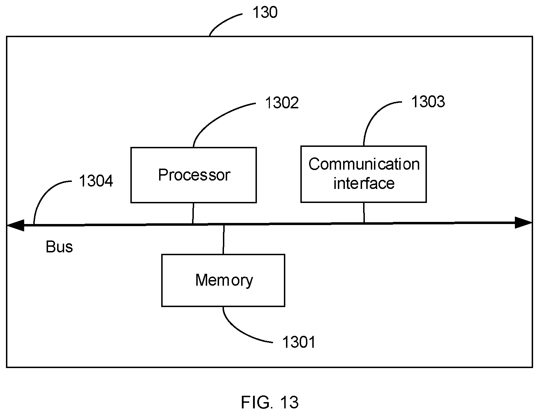

In a case where the functions of the aforementioned integrated modules are realized in the form of hardware, the results of the first communication node and the second communication node provided by the embodiment of the present disclosure may refer to the result of the communication apparatus shown in FIG. 13. As shown in FIG. 13, the communication apparatus 130 includes: a memory 1301, a processor 1302, a communication interface 1303, and a bus 1304.

The memory 1301 may be, but is not limited to, a read-only memory (ROM) or any other type of static storage devices capable of storing static information and instructions, a random access memory (RAM) or any other type of dynamic storage devices capable of storing information and instructions, or an electrically erasable programmable read-only memory (EEPROM), a magnetic disk storage medium or any other magnetic storage devices, or any other medium capable of being used to carry or store desired program codes and capable of being accessed by a computer, which won't be limited herein.

The processor 1302 may be various implemented or executed illustrative logical blocks, modules and circuits described in content of the present disclosure. The processor 1302 may be a central processing unit, a general-purpose processor, a digital signal processor, an application specific integrated circuit, a field programmable gate array or any other programmable logic device, a transistor logic device, a hardware component or any combination thereof. The processor 1302 may implement or execute various illustrative logical blocks, modules and circuits described in content of the present disclosure. The processor 1302 may also be a combination for implementing computing functions, for example, including a combination of one or more microprocessors, or a combination of a digital signal processor (DSP) and a microprocessor.

The communication interface 1303 is configured to connect with other devices through a communication network. The communication network may be an Ethernet, a wireless access network, a wireless local area network (WLAN), or the like.

In some embodiments, the memory 1301 may exist independently of the processor 1302, and the memory 1301 may be connected to the processor 1302 via the bus 1304 for storing instructions or program codes. When the processor 1302 invokes and executes instructions or program codes stored in the memory 1301, the device discovery method provided by the embodiments of the present disclosure may be implemented.

In some embodiments, the memory 1301 may also be integrated with the processor 1302.

The bus 1304 may be an extended industry standard architecture (EISA) bus or the like. The bus 1304 may be classified as an address bus, a data bus, and a control bus. For the convenience of representation, the bus 1304 is only represented by only one bold solid line in FIG. 13, but does not mean that there is only one bus or one type of bus.

Some embodiments of the present disclosure provide a computer-readable storage medium (e.g., a non-transitory computer-readable storage medium) having stored computer program instructions that, upon being executed by a computer, enable the computer to execute the method as described in any of the above embodiments.

For example, the computer-readable storage medium may include, but is not limited to: a magnetic storage device (e.g., a hard disk, a floppy disk, or a magnetic tape, etc.), an optical disk (e.g., a compact disk (CD), a digital versatile disk (DVD), etc.), a smart card and a flash memory device (e.g., erasable programmable read-only memory (EPROM), a card, a stick, or a key drive, etc.). The various computer-readable storage media described in the present disclosure may represent one or more devices for storing information and/or other machine-readable storage media for storing information. The term "machine-readable storage medium" includes, but is not limited to, a wireless channel and various other media capable of storing, containing, and/or carrying instructions and/or data.

An embodiment of the present disclosure provides a computer program product containing instructions. When the computer program product is executed on a computer, the computer is enabled to execute the method in any of the above embodiments.

The foregoing descriptions are merely specific implementations of the present disclosure, but the protection scope of the present disclosure is not limited thereto. Any changes or replacements within the technical scope disclosed in the present disclosure shall be included in the protection scope of the present disclosure. Therefore, the protection scope of the present disclosure shall be determined by the protection scope of the claims.

## Claims

1. A device discovery method, applied to a first communication node, wherein the method comprises:
receiving a discovery signal, wherein the discovery signal is used to discover a power supply device.

2. The method according to claim 1, wherein the discovery signal comprises information related to the power supply device, and the information related to the power supply device comprises at least one of:
a transmission frequency of an energy signal;
a bandwidth of the energy signal;
a waveform of the energy signal;
a period of the energy signal;
a power of the energy signal;
an access and synchronization mode;
an access preamble; or
an authentication mode.

3. The method according to claim 1, wherein the discovery signal is an energy signal transmitted from the power supply device.

4. The method according to claim 1, wherein the discovery signal is a broadcast signal.

5. The method according to claim 1, wherein the discovery signal has a specific waveform, and/or the discovery signal includes a specific sequence.

6. The method according to claim 1, wherein the discovery signal is transmitted on a specific channel.

7. The method according to claim 1, wherein the discovery signal is a periodically transmitted signal.

8. The method according to claim 1, wherein the discovery signal is transmitted using a beam scanning mode.

9. The method according to claim 1, wherein the discovery signal is a signal transmitted on a specific transmission resource.

10. The method according to claim 1, wherein before receiving the discovery signal for the power supply device, the method further comprises:
transmitting a discovery request signal, wherein the discovery request signal is used to request to transmit the discovery signal.

11. The method according to claim 10, wherein the discovery request signal comprises information related to the first communication node, and the information related to the first communication node comprises at least one of:
identity authentication information of the first communication node;
a device type of the first communication node; or
a charging power of the first communication node.

12. The method according to claim 10, wherein the discovery request signal has a specific waveform, and/or the discovery request signal includes a specific sequence.

13. The method according to claim 10, wherein the discovery request signal is a signal transmitted on a specific transmission resource.

14. The method according to claim 10, wherein the discovery request signal is transmitted on a specific channel.

15. The method according to claim 10, wherein the discovery request signal comprises a reference signal, and the reference signal is used to assist the power supply device in channel measurement and/or beam training.

16. The method according to claim 10, wherein the discovery request signal is further used to wake up the power supply device in a dormant state.

17. The method according to claim 10, wherein the discovery request signal includes a beam index, and the beam index is used to instruct the power supply device to transmit a beam.

18. The method according to claim 1, further comprising:
transmitting an access request message to the power supply device or a base station.

19. The method according to claim 18, wherein the access request message comprises identity authentication information of the first communication node.

20. The method according to claim 1, further comprising:
receiving an energy signal of the power supply device.

21. The method according to claim 20, further comprising:
transmitting a reference signal to the power supply device, wherein the reference signal is used to assist the power supply device in channel measurement and/or beam training.

22. The method according to claim 20, wherein the reference signal and the energy signal are transmitted in a time division duplex mode.

23. A device discovery method, applied to a second communication node, wherein the method comprises:
transmitting a discovery signal, wherein the discovery signal is used to discover a power supply device.

24. The method according to claim 23, wherein the discovery signal comprises information related to the power supply device, and the information related to the power supply device comprises at least one of:
a transmission frequency of an energy signal;
a bandwidth of the energy signal;
a waveform of the energy signal;
a period of the energy signal;
a power of the energy signal;
an access and synchronization mode;
an access preamble; or
an authentication mode.

25. The method according to claim 23, wherein before transmitting the discovery signal for the power supply device, the method further comprises:
receiving a discovery request signal transmitted from a first communication node, where the discovery request signal is used to request to transmit the discovery signal.

26. The method according to claim 23, wherein the method is applied to a second communication node being the power supply device, and the method further comprises:
transmitting an energy signal to a first communication node.

27. The method according to claim 26, wherein the method further comprises:
receiving a reference signal transmitted from the first communication node, wherein the reference signal is used for assisting the power supply device in performing channel measurement and/or beam training.

28. A communication apparatus, comprising: a processor and a memory for storing instructions executable by the processor;
wherein, when the processor is configured to execute the instructions, the communication apparatus performs the method according to any one of claims 1 to 27.

29. A computer storage medium, wherein the computer-readable storage medium has stored computer program instructions thereon, and when the computer program instructions are run on a computer, the computer is enabled to perform the method according to any one of claims 1 to 27.
